Europäisches Patentamt

European Patent Office

Office européen des brevets

(19)

(11) Veröffentlichungsnummer: **0 218 822**
**B.1**

(12) **EUROPÄISCHE PATENTSCHRIFT**

(45) Veröffentlichungstag der Patentschrift: **12.12.90**

(51) Int. Cl.⁵: **B 07 B 13/11**

(21) Anmeldenummer: **86110348.9**

(22) Anmeldetag: **26.07.86**

(54) Schwingförderanlage zum Trennen eines Wertstoffgemisches.

(30) Priorität: **14.09.85 DE 8526333 u**

(43) Veröffentlichungstag der Anmeldung:
**22.04.87 Patentblatt 87/17**

(45) Bekanntmachung des Hinweises auf die
Patenterteilung:
**12.12.90 Patentblatt 90/50**

(84) Benannte Vertragsstaaten:
**AT BE CH DE FR GB IT LI LU NL**

(56) Entgegenhaltungen:
**EP-A-0 119 442**
**EP-A-0 139 783**
**DE-A-3 501 777**

(73) Patentinhaber: **Lindemann Maschinenfabrik GmbH**
**Erkrather Strasse 401**
**D-4000 Düsseldorf 1 (DE)**

(72) Erfinder: **Lapp, Hans-Günter, Dipl.-Ing. (FH)**
**Gerhardstrasse 71**
**D-4030 Ratingen (DE)**

(74) Vertreter: **Bergen, Klaus, Dipl.-Ing. et al**
**Patentanwälte Dr.-Ing. Reimar König Dipl.-Ing.**
**Klaus Bergen Wilhelm-Tell-Strasse 14 Postfach 260162**
**D-4000 Düsseldorf 1 (DE)**

Courier Press, Leamington Spa, England.

**Beschreibung**

Die Erfindung betrifft eine Schwingförderanlage zum Trennen eines in einem insbesondere rinnenartigen Förderer zugeführten Wertstoffgemische in zwei Materialströme, d.h. in einen Strom mit im wesentlichen körperförmigen, insbesondere hohlen Rundmaterialen und in einen Strom mit im wesentlichen flachen Materialien.

Die Rückgewinnung von Wertstoffen aus Abfällen, wie beispielsweise aus Gewerbemüll und insbesondere aus häuslichen Abfällen mit gemischt eingesammelten Wertstoffen, wird heute nicht nur allgemein als notwendig angesehen, sondern auch in verschiedenster Art praktiziert bzw. versucht. Nicht zuletzt wegen der regional recht unterschiedlichen Verhältnisse haben sich unterschiedliche Behandlungsmethoden herausgebildet, wobei auch Umweltfaktoren und insbesondere Investitionskosten ein große Rolle spielen.

Von den insgesamt bekannten Verfahren und Vorrichtungen befaßt sich ein Teil mit der Aufbereitung von sogenannten Wertstoffmischungen, die in vorsortiertes Ausgangsmaterial darstellen, das keine Obst- Gemüse- oder dergleichen Küchenabfälle, Achse und ähnliches mehr enthält. Die am Abfallort vorsortierten und gesondert gesammelten Wertstoffe umfassen im wesentlichen einerseits Glas (möglichst ganze Flaschen), NE-Dosen, Kunststoffdosen sowie sonstige Behälter, und andererseits Mischpapier wie beispielsweise Zeitungen, Illustrierte, Kataloge, Prospekte und Pappe sowie Folien, Metalle, Textilien, Holz, Leder und artverwandte Stoffe, d.h. sowohl körperförmige, insbesondere hohle Rundmaterialien als auch flache Materialien. Diese Bestandteile liegen als Gemisch vor und werden auch in der sogenannten ''grünen Tonne'' gesammelt.

Die vorliegende Erfindung befaßt sich mit derartigen Gemischen, die als ''Wertstoff'' bezeichnet werden und wegen der erheblichen Nachteile bei bekannten, nach dem Prinzip der Vorzerkleinerung arbeitenden Trennanlagen als unzerkleinerte Wertstoffe aufbereitet werden sollen.

Zum Aufbereiten unzerkleinerter Wertstoffe wird in der GB—PS 1 573 533 zwar in relativ einfacher Weg zur Wertstofftrennung dargestellt und beschrieben, der jedoch mit erheblichen Mängeln behaftet ist, die der Grund dafür sind, daß sich diese Art der Aufbereitung nicht als praktikable Lösung durchgesetzt hat. Das zugeführte Wertstoffgemisch fällt dort je nach Schwere mit unterschiedlicher Geschwindigkeit auf ein unter der Zuliefervorrichtung befindliches Sortierband, welches in Förderrichtung stark, beispielsweise unter ca. 40°, ansteigt. Durch den starken Aufprall, der durch Anordnung einer Prallplatte hinter der Bandfläche noch verstärkt werden soll, springen die harten Anteile des Wertstoffgemische vom Band in eine Sammelschütte, während der Papieranteil auf dem Förderband haften und bis zum Bandende mitgenommen werden soll, wo er ebenfalls gesammelt wird.

Diese Anordnung hat sich für eine saubere Trennung der Gemischanteile als praktisch ungeeignet erwiesen. Der als wesentlich für die Trennwirkung betrachtete Aufprall ist eher störend als nützlich, da dadurch nicht nur ein großer Teil der Glasanteile zu Bruch geht, zersplittert und daher schwer weiter zu verarbeiten ist, sondern zudem die schweren, härteren Anteile mit dort gewünscht hoher Energie auf das Band prallen und dort auf die leichten Anteile treffen, die das Band mit nach oben fördern soll, vor allem auf die Papieranteile, und diese mindestens teilweise in die verkehrte Richtung mitreißen.

Aus der EP—A—0 119 442 ist es zum Sortieren und Trennen eines Wertstoffgemische bekannt, daß einem Sortierteller als Zuführung für sowohl körperförmige als auch flache Materialien enthaltende Wertstoffgemische ein Schwingförderer mit einem Förderband vorgeschaltet ist. Damit sich bereits während des Transportes zur nächsten Stufe, d.h. zum Sortierteller eine Trennung in mindestens zwei Wertstoffströme ergibt, weist der Schwingförderer eine Querneigung auf. Da sich allerdings aufgrund der systembedingten, die Längsförderung bewirkenden Schwingungen die Reibung zwischen den flächigen Papieranteilen und der Förderoberfläche so stark vermindern kann, daß auch diese zur tiefer liegenden Seite wandern und somit die angestrebte Wirkung der Querneigung nicht eintritt, wird der die Förderung in Längsrichtung bewirkenden Schwingung eine entgegen der Querneigung gerichtete Schwingung überlagert. Auf diese Weise ergibt sich ein aus der Mittellängsachse des Schwingförderers zur höher liegenden Seite hin gedrehter, resultierender Fördervektor.

Der Erfindung liegt die Aufgabe zugrunde, eine Vorrichtung zum Sortieren und Trennen eines Wertstoffgemisches in mindestens zwei Materialströme zu schaffen, die einen einfachen Ablauf und bei größtmöglicher Schonung insbesondere der Glasanteile sowie mit geringem technischen und personellen Aufwand ein sauberes Trennen der gewünschten Wertstoffkomponenten im Verlaufe ihres Förderweges von einer Abgabeseite bis zum Austrittsbereich ermöglicht.

Erfindungsgemäß wird diese Aufgabe durch zumindest zwei Unwuchtmotoren gelöst, die einander versetzt gegenüberliegend an den Längsseiten der Förderrinne angeordnet sind.

Die Erfindung geht hier von den bisher ausschließlich zu Transportzwecken verwendeten, mit Unwuchtmotoren betriebenen Schwingförderanlagen aus, bei denen dem Transportgut eine Schrägwurfbeschleunigung aufgezwungen wird, um eine Förderung von Schüttgütern zu erreichen. Die Schrägwurfbeschleunigung stellt sich dabei als Resultierende aus der vertikalen und horizontalen Beschleunigung ein, wobei die vertikale Beschleunigung größer als die Erdbeschleunigung sein muß. Diese Beschleunigung kann auf mehreren Wegen erreicht und inbesondere durch den Anlenkungs- oder Wurfwinkel der an den Schwingförderer angreifenden Bewegungsübertragungselemente, sowie der Schwingungszahl pro Minute und der Amplitude beeinflußt werden. Durch den Sonderdruck aus "Deutsche Hebe- und Fördertechnik" Heft 3, 1961. "Förderung von Schüttgütern in Schwingförderanlagen mit Unwucht-Motor-Antrieb" ist der Vorschlag bekannt, an einer Förderrinne oder einem Förderrohr einer Schwingförderanlage dann zwei Unwuchtmotoren anzuordnen, wenn größere Leistungen erforderlich sind oder der Transportweg sehr lang ist. Die einander gegenüberliegend an jeder Längsseite der Förderringe befestigten Unwuchtmotoren synchronisieren sich zwangsläufig, wenn sie die entgegengesetzte Drehrichtung haben und die Anlage selbst mindestens zwei Freiheitsgrade hat; letzteres ist gewährleistet, da die Förderrinne üblicherweise an vier Stellen entweder auf Federn aufgebaut oder abgefedert aufgehängt ist.

Die Kenntnis über die in Schwingförderanlagen erreichte Beschleunigung des Transportgutes wird erfindungsgemäß durch die nun nicht mehr einander fluchtend, sondern versetzt gegenüberliegend angeordneten Unwuchtmotoren gezielt so umgesetzt, daß sich für die flachen Materialien ein von den Rundkörpern völlig abweichender Bewegungsablauf und damit Transportweg ergibt und am Ende des Förderweges zwei unterschiedliche Materialströme mit den gewünschten Wertstoffanteilen vorliegen.

Die Motoren lassen sich hierbei vorteilhaft so anordnen, daß der Unwuchtmotor der Rundkörper-Förderseite in Förderrichtung gegenüber dem Unwuchtmotor der Flachmaterial-Förderseite versetzt ist. Dieser Effekt kann bei einem Schwingförderer mit einem Unwuchtmotor an jeder Längsseite der Förderrinne erreicht werden, indem die Unwuchtmotoren um ein solches Maß versetzt werden, daß der Transportweg des flachen Materials von der Aufgabeseite bis zum Austrittsbereich am Ende der Förderrinne im wesentlichen senkrecht zu einer die Motorschwerpunkte der beiden Motoren verbindenden Geraden verläuft; diese Verbindung ist gegenüber einer zum Bestimmen des Versatzmaßes alternativ heranzuziehenden, nämlich die Achsmittelpunkte der Motoren schneidenden Geraden vorzuziehen, weil dann der Ort der größten Unwucht als Ausgangskriterium berücksichtigt wird.

Im Verlaufe des Transportes von der Aufgabeseite bis zum Austrittsbereich gelangen die flachen Materialien, die im Unterschied zur im wesentlichen linienförmigen Anlage der Rundkörper dem Boden der Förderrinne flächig und unter großem, die Mitnahme unterstützenden Reibungseinfluß anliegen, in den Wirkbereich des Unwuchtmotors der Flachmaterial-Förderseite, der der Aufgabeseite am nächsten ist. Je nachdem, ob die flachen Teile mittig, links oder rechts in die Rinne aufgegeben werden, wandern sie deshalb mehr oder weniger weit in Richtung auf diese Längsseite der Förderrinne, während sich die geringeren Reibungseinflüssen unterliegenden Rundkörper an der gegenüberliegenden Längswand der Förderrinne konzentrieren, d.h. an der Rundkörper-Förderseite.

Das seitwärts orientierte Fördern der flachen Anteile und das Trennen von den Rundkörpern kann durch einen in Richtung auf die Rundkörper-Förderseite geneigten Boden der Förderrinne unterstützt werden. Während nämlich die flächigen Teile trotz der Neigung bedingt durch die günstigeren Reibungsverhältnisse auf dem geneigten Boden haften, üben die Reibungskräfte auf die Rundkörper nur ein geringfügige Wirkung aus, so daß diese unter dem Schwerkrafteinfluß die Reibungskräfte überwinden und sich entsprechend der Neigung des Bodens in Richtung der Gefälleseite, d.h. zur Längsseite der Förderrinne mit dem in Förderrichtung versetzten Unwuchtmotor und damit an der Rundkörper-Förderseite der Rinne orientieren.

Das Ablenken bzw. Fördern des Flachmaterials zur gewünschten Seite der Förderrinne läßt sich weiterhin durch unterschiedliche Unwuchten der Motoren verstärken. Eine weniger große Unwucht des Motors der Flachmaterial-Förderseite verbessert hierbei das Trennen der Materialien.

Vorteilhaft kann zumindest der Boden der Förderrinne innenseitig mit einem rutschfesten und dämpfenden Material ausgekleidet werden. Hierfür eignet sich beispielsweise eine dicke und sich gegebenenfalls auch an den inneren Seitenwänden der Förderrinne erstreckende Gummischicht von etwa 10 mm; hierdurch werden nicht nur die Geräusche beim Fördern von Glas und metallischen Dosen gedämpft, sondern gleichermaße wird die Haftung der flachen Materialien verbessert.

Wenn am Ende der Förderrinne im Austrittsbereich des Materials ein siebartiger Rost, beispielsweise ein Stangenrost angeordnet ist, lassen sich Feinanteile entfernen, die vorher noch nicht abgesiebt wurden; gleichermaßen werden die Materialströme dann auch von solchen Anteilen befreit, die sich während des Transportes abgelöst haben oder z.B. durch Glasbruch entstanden sind.

Die Erfindung wird nachfolgend anhand eines in der Zeichnung dargestellten Ausführungsbeispiels näher erläutert. Es zeigen:

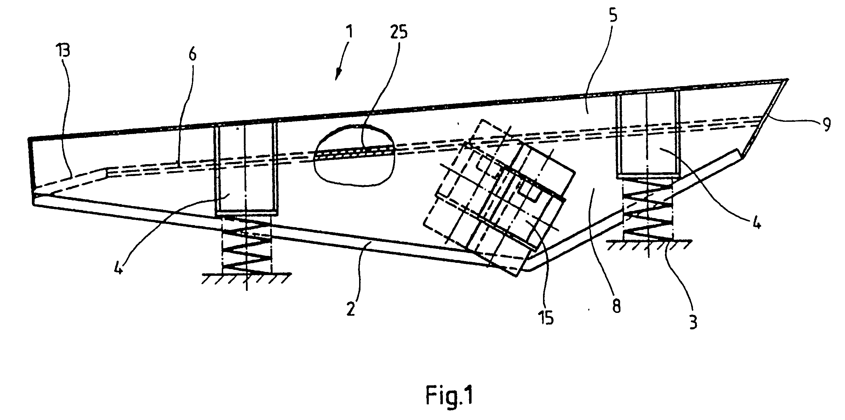

Fig. 1 eine Seitenansicht eines Schwingförderers, schematisch dargestellt; und

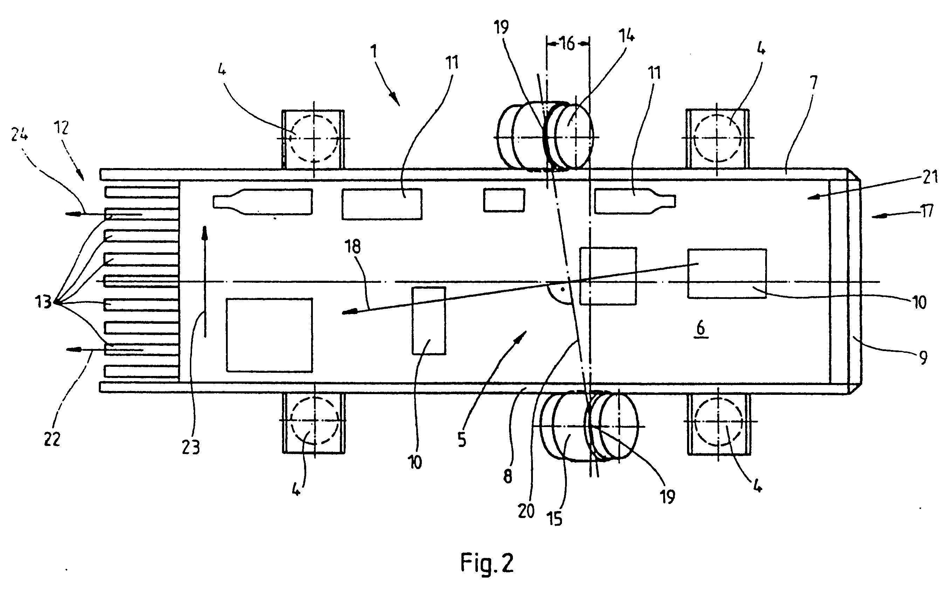

Fig. 2 eine Draufsicht des Gegenstandes gemäß Fig. 1.

Ein Schwingförderer 1 lagert auf an seinem Grundrahmen 2 sowie einem Fundament 3 festgelegten Federn 4, beispielsweise vier verteilt angeordneten Schwinggummipuffern, und weist eine rechteckige Förderrinne 5 aus einem Boden mit an den Längsseiten Wänden 7, 8 sowie einer Stirnwand 9 auf. Die Stirnwand 9 verschließt die Förderrinne 5 ander Aufgabeseite für ein aus flachen Materialien 10 und körperförmigen, insbesondere hohlen Rundkörpern 11 bestehendes Wertstoffgemisch, das über einen nicht dargestellten Dosierer von oben zugeführt und sowohl durch die Stirnwand 9 als auch durch die Seitenwände 7, 8 am Herausfallen aus der Förderrinne 5 gehindert wird. Im Austrittsbereich 12 ist die Förderrinne 5 hingegen offen und der Boden 6 geht in einen Stangenrost 13 als Sieb über, so daß sowohl die flachen Materialien 10 als auch die Rundkörper 11 in ihnen am Ende der Förderrinne 5 zugeordneten nicht näher dargestellte Auffangbehälter fallen können, während Feinanteile sowie Glasbruch des Wertstoffgemisches zuvor beim Passieren des Stangenrostes 13 aus den Materialströmen entfernt werden. Für den Transport des Wertstoffgemisches sorgen Unwuchtmotoren 14, 15, von denen jeweils einer an jeder Längsseite der Förderrinne 5 an den Seitenwänden 7 bzw. 8 befestigt ist.

Die Unwuchtmotoren 14, 15 sind um ein Maß 16 so zueinander versetzt angeordnet, daß sich aufgrund der von ihnen bewirkten Schwingungen beim Fördern des Wertstoffgemisches in Längsrichtung gemäß Pfeil 17 ein dem Förderweg des flachen Materials 10 entsprechender Fördervektor 18 ergibt, der im wesentlichen im rechten Winkel zu einer die beiden Motorschwerpunkte 19 der Unwuchtmotoren 14, 15 verbindenden Geraden 20 verläuft. Das abhängig von der Breite und der Länge der Förderrinne 5 bemessene Versatzmaß 16 wird so gewählt, daß sich selbst an der äußersten rechten Seite 21 aufgegebenes flaches Material 10 bis zum Ende der Förderrine 5 seitlich so weit nach links bewegt, daß es im Bereich 12 der Flachmaterial-Förderseite entsprechend dem Pfeil 22 als von Rundkörpern 11 befreiter Materialstrom austritt.

Das bedingt durch den Versatz der Motoren zueinander unterschiedliche Einwirken der Schwingungen auf den Materialstrom zum Zwecke des Trennens der flachen von den Rundkörpern wird weiterhin dadurch beeinflußt, daß der der Aufgabeseite nächste, an der Seitenwand 8 angeordnete Motor 15 mit einer geringeren Unwucht als der Motor 14 an der anderen Längsseite der Förderrinne 5 betrieben wird und/oder der Boden 6 der Förderrinne 5 in Richtung des Pfeiles 23 quer, d.h. in Richtung auf die Seitenwand 7 mit dem Umwuchtmotor 14 und damit in Richtung auf eine Rundkörper-Förderseite gemäß Pfeil 24 geneigt ist. Mit diesen einzeln oder in Kombination angewendeten Maßnahmen wird erreicht, daß die Rundkörper 11 zu der tieferliegenden Seite der Förderrinne 5 wandern, wo sie durch die Seitenwand 7 am Herausfallen gehindert werden und so an der Rundkörper-Förderseite als ein von den flachen Materialien 10 getrennter Materialstrom ausgetragen werden.

Durch die systembedingten Beeinflussungen während des Transportes des aufgegebenen Materialstroms bis zum Austrittsbereich 12 werden die Reibungen zwischen den flachen Materialien 10 und den Rundkörpern 11 unterschiedlich beeinflußt. Einerseits wird die Reibung zwischen den Rundkörpern und der Förderoberfläche so stark vermindert, daß sich diese Anteile an der rechten Seitenwand 7 des Förderers konzentrieren. Andererseits ist die Reibung zwischen den flachen Anteilen und der Rinnenoberfläche so groß, daß die flachen Anteile auf dem Rinnenboden haften bleiben und im wesentlichen entlang dem Fördervektor 18 von rechts nach links zur Flachmaterial-Förderseite 22 wandern. Der für das flache Material notwendige Hafteffekt kann verbessert werden, indem zumindest der Boden 6 der Förderrinne 5 mit einem rutschfesten Material 25, beispielsweise Gummi, ausgekleidet wird, wodurch sich gleichzeitig eine Geräuschdämpfung beim Fördern einstellt.

Die Rundkörper 11 konzentrieren sich jeweils an der Seitenwand der Förderrinne 5, die den von der Stirnwand 9, d.h. von der Aufgabeseite des Wertstoffgemisches am weitesten entfernt liegenden Motor aufweist; bei von der dargestellten Ausführung abweichender Anordnung der Motoren 14 und 15 würde sich somit der Materialstrom der Rundkörper 11 an der linken Seite und der für das flache Material 10 an der rechten Seite der Förderrinne 5 konzentrieren.

**Patentansprüche**

1. Schwingförderanlage zum Trennen eines in einem insbesondere rinnenartigen Förderer zugeführten Wertstoffgemisches in zwei Materialströme, d.h. in einen Strom mit im wesentlichen körperförmigen, insbesondere hohlen Rundmaterialien und in einen Strom mit im wesentlichen flachen Materialien, gekennzeichnet durch zumindest zwei Unwuchtmotoren (14, 15), die einander versetzt gegenüberliegend an den Längsseiten der Förderrinne (5) angeordnet sind.

2. Vorrichtung nach Anspruch 1, dadurch gekennzeichnet, daß der Unwuchtmotor (14) der Rundkörper-Förderseite in Förderrichtung (17) gegenüber dem Unwuchtmotor (15) der Flachmaterial-Förderseit versetzt ist.

3. Vorrichtung nach Anspruch 1 oder 2, dadurch gekennzeichnet, daß der Boden (6) der Förderrinne (5) in Richtung auf die Rundkörper-Förderseite geneigt ist.

4. Vorrichtung nach einem oder mehreren der Ansprüche 1 bis 3, gekennzeichnet durch unterschiedliche Unwuchten der Motoren (14, 15).

5. Vorrichtung nach einem oder mehreren der Ansprüche 1 bis 4, dadurch gekennzeichnet, daß zumindest der Boden (6) der Förderrinne (5) innenseitig mit einem rutschfesten und dämpfenden Material (25) ausgekleidet ist.

6. Vorrichtung nach einem oder mehreren der Ansprüche 1 bis 5, gekennzeichnet durch einen am Ende der Förderrinne (5) im Austrittsbereich (12) des Materials angeordneten siebartigen Rost (13).

**Revendications**

1. Convoyeur oscillant pour la séparation d'un mélange de matériaux nobles alimenté notamment dans un convoyeur à gouttière, en deux courants de matière, c'est-à-dire en un courant de matériaux essentiellement ronds, volumineux, plus particulièrement des matériaux creux, et en un courant de matériaux essentiellement plats, caractérisé par au moins deux moteurs déséquilibrés (14, 15) qui sont disposés l'un en face de l'autre de façon décalée, sur les côtés longitudinaux de la gouttière de convoyeur (5).

2. Dispositif selon la revendication 1 caractérisé en ce que le moteur déséquilibré (14) correspondant au côté du transport des matériaux rond est décalé dans le sens de transport (17) par rapport au moteur déséqulibré (15) correspondant au côté du transport des matériaux plats.

3. Dispositif selon la revendication 1 ou 2, caractérisé en ce que le fond (6) de la gouttière de transport (5) est incliné en direction du côté de transport des matériaux ronds.

4. Dispositif selon l'une ou plusieurs des revendications 1 à 3 caractérisé par des déséquilibres différents des moteurs (14, 15).

5. Dispositif selon l'une ou plusieurs des revendications 1 à 4 caractérisé en ce qu'au moins le fond (6) de la gouttière de transport (5) est revêtu du côté interne d'un matériaux antidérapant et amortisseur (25).

6. Dispositif selon l'une ou plusieurs des revendications 1 à 5 caractérisé par une grille (13) en forme de tamis agencée à l'extrémité de la gouttière de transport (5), dans la zone d'évacuation (12) des matériaux.

**Claims**

1. A vibratory transporting plant for separating a mixture of valuable materials being delivered in a conveyor, in particular a trough-like conveyor, into two streams of material, namely into a stream of materials essentially in the form of bodies, in particular hollow, rounded materials, and a stream of substantially flat materials, characterised by at least two opposed unbalance motors (14, 15) offset from one another and located on opposite sides of the conveyor trough (5).

2. Apparatus according to claim 1, characterised in that the unbalance motor (14) on the rounded body side of the conveyor is offset in the direction of transport (17) relative to the unbalance motor (15) on the flat material side of the conveyor.

3. Apparatus according to claim 1 or claim 2, characterised in that the bottom (6) of the conveyor trough (5) is inclined towards the rounded body side of the conveyor.

4. Apparatus according to any one or more of claims 1 to 3, characterised in that the motors (14, 15) have different degrees of unbalance.

5. Apparatus according to any one or more of claims 1 to 4, characterised in that at least the bottom (6) of the conveyor trough (5) is clad on the inside with a non-slip damping material (25).

6. Apparatus according to any one or more of claims 1 to 5, characterised in that a sieve-like grate (13) is arranged at the end of the conveyor trough (5) in the material outlet region (12).

Fig.1

Fig.2